# EUROPEAN PATENT SPECIFICATION

(11) **EP 3 058 295 B1**
(45) Date of publication and mention of the grant of the patent: **24.07.2019**
(21) Application number: 14753449.9
(22) Date of filing: 12.08.2014
(51) Int. Cl.: F25D 23/08, F25D 25/02, F25D 23/02

(54) **COLD STORAGE APPLIANCE**
VORRICHTUNG FÜR KALTLAGERUNG
APPAREIL DE STOCKAGE FROID

(30) Priority: 15.10.2013 GB 201318261
(43) Date of publication of application: 24.08.2016
(73) Proprietor: Illinois Tool Works Inc., Glenview, IL 60025 (US)
(72) Inventor: HUNT, Gareth, King's Lynn Norfolk PE32 1SY (GB)
(74) Representative: Phillips & Leigh LLP
(86) International application number: PCT/US2014/050789
(87) International publication number: WO 2015/057296

(56) References cited:
- WO-A2-2007/010267
- JP-A- 2012 047 347
- US-A1- 2013 193 822

## Description

### Field of the invention

The present invention relates to cold storage appliances.

### Background

Cold storage appliances find use in many fields. The hygienic storage of food and other perishables is a crucial problem in commercial catering environments and food retail environments. In almost all catering environments and food retail environments, at least some food or perishables will need to be stored in cold storage appliances such as refrigerators or freezers. Cold storage of biological samples, transplant material, or medicines is also a key consideration in hospitals, and scientific laboratories may
require cold storage appliances for the storage of volatile chemicals which would evaporate or deteriorate if stored at ambient temperature.

The traditional design of a refrigerator or freezer is of a tall appliance standing upright. This confers the advantage of having a large storage volume whilst taking up a comparatively small amount of floor space. Such appliances typically have large storage compartments divided by wire shelving cooled by a circulating airflow. This gives rise to multiple problems. Firstly, the circulation of air gives rise to the possibility of cross-contamination between different foodstuffs or other content, even when these are contained on different shelves. Secondly, traditional upright refrigerator or freezer designs present a front facing door for access to the interior.
Within the cooling appliance, a dense pool of cooled air is found towards the base of the interior, which exerts pressure against the seal at the base of the front facing door. When the door is opened, this cool air rushes out of the base of the cold storage appliance and warm ambient air rushes in, causing a rapid deviation in the internal temperature of the appliance. Additional energy is consumed by the cooling means of the appliance in returning the interior compartment to the desired temperature as a result.

Another traditional cooling appliance design which avoids the second problem is the classic chest freezer, which provides a cooled internal compartment with an opening at the top, accessed by a top facing door. This alleviates the problem of the inrush of warm air on opening, since the cool air tends to remain pooled in the internal compartment, but tends to occupy a large amount of floor space.

Another traditional cold storage appliance design may be termed the "counter appliance". Such counter appliances are particularly useful in food preparation. Such appliances are actually built into a counter in a food retail or catering environment. The counter comprises several openings to a common internal cold space. In this way the cold storage appliance is contained entirely within the counter. However, this still has the problem of a single common internal cold space in which air is circulated giving rise to cross-contamination, and of course any front-facing doors on such appliances will give rise to the same loss of cool air when opening as an upright appliance. Drawers in such appliances tend to be perforated in the bottom in order to allow for air flow when cooling, and therefore allow cold air to escape when opened.

Prior art appliances are given in GB patent nos. 602590, 581121, and 579071, which disclose cabinet- like refrigerators with a plurality of rectangular openings and drawers extending into a common cooled space within. Since the drawers seal to a common front space rather than being individually sealed, cross-contamination between drawer units is possible.

Another cold storage appliance design is provided in EP1216389, which discloses a cold storage appliance featuring one or more drawers each with its own individual cooling means and each with an individual lid sealing the drawer closed. This solves the problem of cross-contamination since each drawer is individually sealed. Likewise, the problem of cold air rushing out of the appliance when it is opened is alleviated, since the cold air will tend to pool in the drawer.

However, the design presents a number of additional problems. Simply opening the drawer through a horizontal motion will, in most versions depicted in EP1216389, cause the seal elements in the lid and in the drawer to rub against one another in a manner which, with regular and repeated operation (such as might be expected, for example, in a fast food preparation station with such a cold storage appliance installed), can be expected to damage and wear away the seal, reducing its ability to keep out warm air and thus reducing the efficiency of the appliance. One example depicted in EP1216389 depicts a drawer with an inclined lid and inclined drawer walls and seal, but this solution is decidedly suboptimal since the inclined walls will allow cold air to escape out of the back of the drawer when it is opened, and will also mean a less efficient use of space since the drawer cannot be packed to its full height all the way back without the risk of items falling out of the back when it is opened. Another solution offered in EP1216389 is to have a minor component of vertical motion when opening and closing the drawer in order to avoid rubbing against the seal during the horizontal motion; however, this is inherently more complex than simply pulling the drawer open horizontally and pushing it shut horizontally.

An alternate solution is presented in EP1700070, in which a magnetic seal is specially adapted such that the resiliently flexible seal of one sealing loop biases its magnetic components away from the other sealing loop when lateral motion between the drawer and its lid move the sealing loops out of alignment. This solution is distinguished from prior art magnetic seals on refrigerator doors (such as that presented in US 5309680) in that it requires the use of resiliently flexible seals that provide sufficient biasing force that the magnetic interaction only overcomes this biasing to form the seal when the seals are completely aligned, thereby causing the aggregate magnetic attraction to overcome the biasing; over long periods of use, it can be expected that the resiliency of the flexible seal deteriorates over time due to wear through usage (or, indeed, if the seal material becomes damaged in use, perhaps through exposure to materials stored in the drawer), and of course once the biasing starts to fail sliding contact between the sealing loops during opening and closing will begin to increase along with all of the associated problems thereof.

Another issue with both EP1216389 and EP1700070 is that when the drawer is fully packed with foodstuffs it is possible that some food will be pressed against the seal, rubbing against the seal when the drawer is opened and leaving behind grease. A grease bridge across the seal could then form which would create a potential route for microbial transfer. A cold storage appliance according to the preamble of independent claim 1 is known from US2013193822.

### Summary of invention

In its general aspect the invention provides a cold storage appliance comprising the following features:
a) at least one open-topped container comprising an interior compartment, exterior walls, a base and a sealing surface;
b) a lid associated with the container, comprising a sealing surface;
c) a cooling mechanism associated with the container, comprised either in the container or in the associated lid;
d) a structure adapted to hold all of the above;
wherein the container is adapted such that it may move in an essentially horizontal direction between a closed position wherein the container and lid sealing surfaces meet and form a seal and an open position wherein the interior compartment is accessible, and the sealing surface comprised on the container is positioned on the exterior walls of the container such that at least a portion of the exterior wall is above the sealing surface,characterised in that the plane of the sealing surface comprised on the container is inclined such that a greater proportion of the exterior walls are above the sealing surface on one side of the container than on the other side. Suitable sealing surfaces may include, but are not limited to, gaskets and smooth gasket sealing counterface areas (for example, a gasket on the lid and a counterface area on the drawer, or a gasket on the drawer and a counterface area on the lid) or magnetic sealing means on one or both of the container or lid.

Whereas prior art appliances such as those in EP1216389 locate the sealing surface on their container towards the top of the exterior walls, in the present invention the sealing surfaces are located part of the way down the exterior walls. This solves the problem of grease and other contaminants from anything stored in the appliance from contacting the seal, since the seal is kept away from such materials.

According to the invention, the plane of the sealing surface on the container is inclined such that a greater proportion of the exterior walls are above the sealing surface on one side of the container than on the other side. In this way the side with the greater proportion of the exterior walls above the gasket can be assigned as the rear of the container, whereas the front of the container (with an opening handle or other opening mechanism) can be at the side with less of the exterior walls above the sealing surface. (Optionally, the sealing surface comprised on the container may run along the top of the exterior wall on this side of the container.) The inclined sealing surface allows the container to be moved between the open position and closed position by simply moving it in a horizontal direction. Due to the incline of the sealing surface, purely horizontal motion of the container in such examples of the invention does not result in sustained rubbing against the seal. Therefore the motion of the container between the open and closed position can be purely horizontal without causing rubbing and erosion to the seal, unlike in the case where the seal is horizontal. Furthermore, because there is no sliding contact or relative sliding movement between the sealing surfaces and the seal is established via compression, most prior art magnetic seals designed to establish a magnetically-maintained seal through compression (such as those utilised on hinged refrigerator doors) will work with the present invention.

Preferably, the external walls define a horizontal product load level. This means that from the front of the container to the back the external walls themselves are not inclined, even though the sealing surface is inclined. This level product load line simplifies packing of the container, and also establishes a cold air well within the container and makes it more difficult for cold air to escape when the drawer is opened, increasing appliance efficiency.

Preferably, as an aid to sealing the container, the sealing surfaces could comprise magnets arranged to impose an attractive force towards each other when the container is in the closed position. Where this is the case, the magnets could be further arranged to impose a repulsive force towards each other when the container is moved out of the closed position, and this will act as an aid to opening the container.

The lid may be adapted to remain stationary throughout any motion of the container. Alternately, the lid may move relative to the structure and the container when the container moves between the closed position and the open position (for instance, the lid may come out with the container as it is withdrawn from the structure and then automatically open as the container reaches the open position).

Any cooling means is acceptable but a simple way of implementing the cooling means would be to provide an evaporator and at least one fan adapted to circulate air.

An illustrative embodiment of the invention is described below with reference to the drawings.

### Description of Drawings

Fig. 1 depicts the exterior of a cold storage appliance embodying the present invention.
Fig. 2 depicts the same exterior with two drawers slightly open in order to depict important features. Fig. 3 depicts one of the selfsame drawers and its associated lid.
Fig. 4 depicts a cross-sectional view of the drawer and its lid.

### Detailed Description

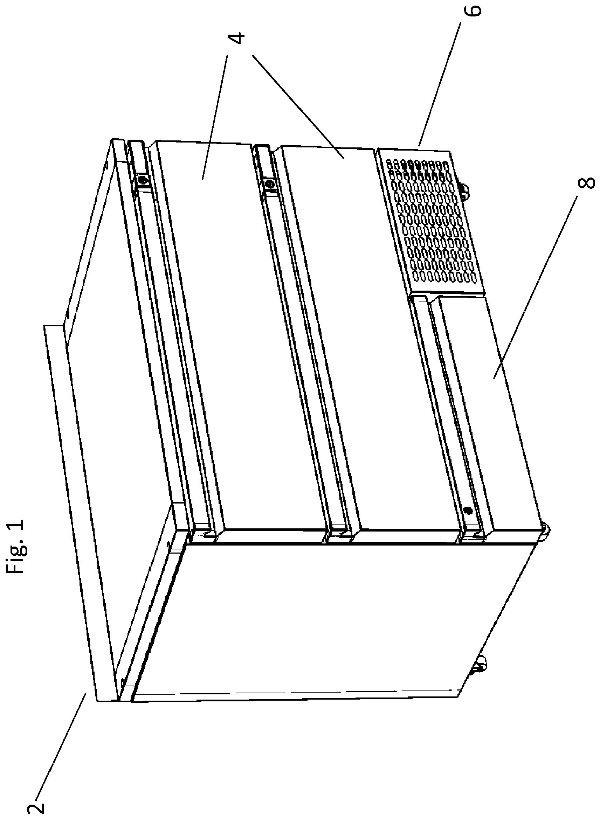

Figure 1 presents a cold storage appliance 2 according to an illustrative embodiment of the present invention, comprising a number of optional features. The appliance 2 comprises an outer casing and includes drawers 4 which are refrigerated in use. A heat pump 6 for the refrigeration system(s) associated with the cold storage appliance is found in its base. Next to the heat pump is installed an additional drawer 8 which is kept at ambient temperature and provides storage for materials which do not require refrigeration.

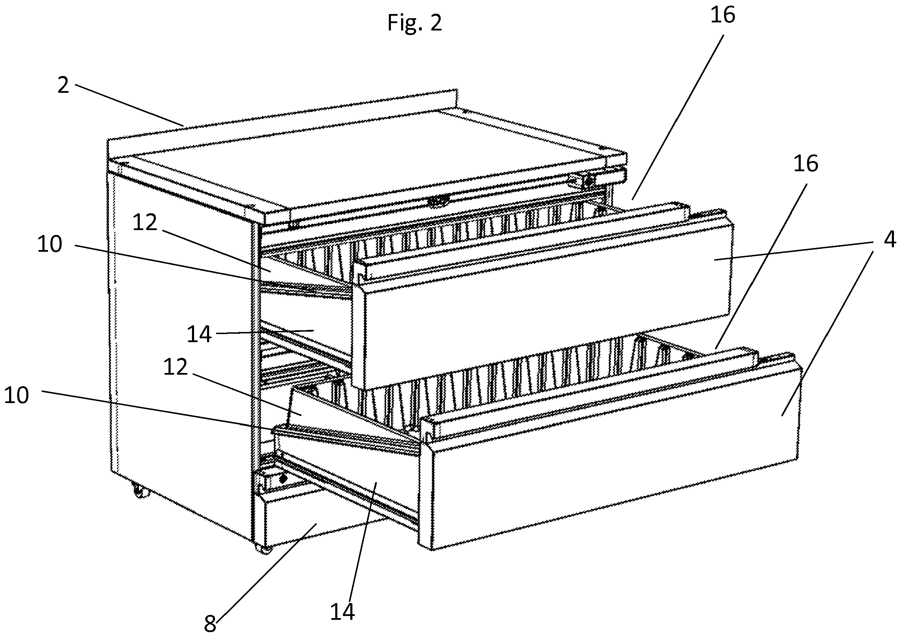

Figure 2 depicts the same cold storage appliance 2 with the refrigerated drawers 4 opened to provide access to their interiors 16. For simplicity the precise mounting of the drawers 4 on their runners is not depicted but any arrangement which will allow the drawers 4 to open via generally (and preferably substantially) horizontal motion will suffice for the purposes of the present invention. In this position we can see a sealing surface 10 associated with each of the refrigerated drawers 4. The sealing surface 10 is positioned such each drawer 4 has a portion 12 of its exterior walls above the sealing surface 12 and a portion 14 of its exterior walls below the gasket14.

The sealing surface 10 is inclined such that the portion of the exterior walls above the sealing surface 12 accounts for a greater proportion of the total height of the exterior wall at the rear of the drawer 4 than it does at the front of the drawer 4. Preferably, the total height of the exterior walls is consistent on at least three sides of the drawer 4 so as to define a load line parallel with the tops of said walls (discussed below).

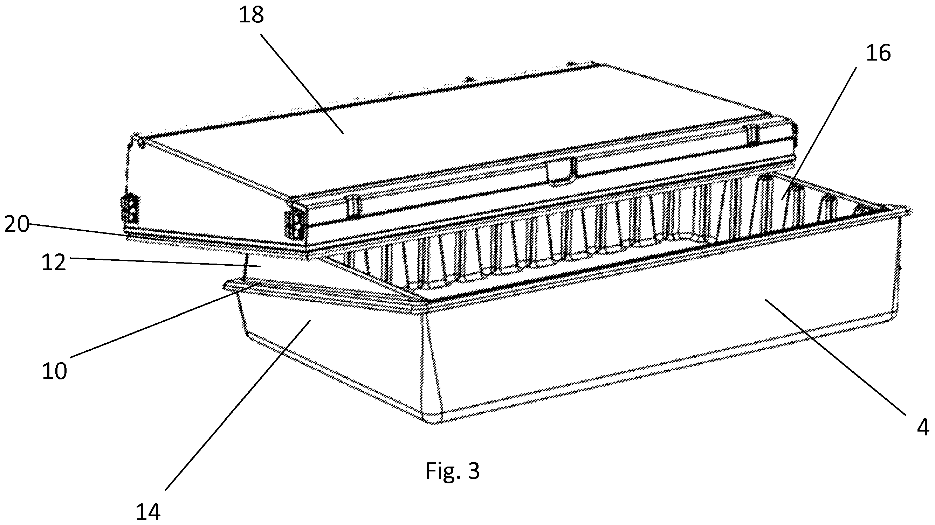

In order to reduce the volume to be refrigerated and to minimise airflow between the drawers 4, each of the refrigerated drawers 4 has its own lid 18 within the cold storage appliance 2. Figure 3 depicts one of the drawers 4 and its lid 18. (Features attached to the front of the drawer 4 to aid in opening like a handle are not depicted in this figure for clarity). It can be seen that the lid 18 has its own sealing surface 20 inclined at the same angle as the gasket 10 on the drawer 4, such that when the drawer 4 is shut the sealing surfaces 10,20 meet to form a seal. One way to provide such sealing surfaces 10, 20 is to provide a gasket on one of the lid 18 or drawer 4 and a smooth gasket sealing counterface area on the other; where such an embodiment is used, it is preferable to have the gasket on the lid 18 and the smooth counterface area 4 on the drawer, since splashes tend to go downwards and it is easier to clean a smooth gasket sealing counterface area than a gasket.

The fact that the sealing surfaces 10, 20 are inclined means that the drawer 4 can be opened and shut with a seal formed when shut with solely horizontal movement of the drawer 4, but at the same time said horizontal movement does not cause the sealing surfaces 10, 20 to rub against each other. (Such friction would make opening and closing the drawer more difficult, and could also cause wear on the sealing surfaces 10, 20 or smear anything which happened to be spilled on the sealing surfaces 10, 20 along the length of the sealing surfaces 10, 20.) This is a clear advantage over horizontal sealing surfaces, which if provided would necessitate a vertical motion of the drawer 4 in the process of bringing the gaskets 10, 20 together when closing the drawer 4 to make the seal and a similar vertical motion when opening the drawer 4 to stop the sealing surfaces 10, 20 rubbing against each other. The seal made by the sealing surfaces 10, 20 can be enhanced with the use of magnets in the sealing surfaces 10, 20 arranged to exert an attractive force on one another once the gaskets 10, 20 are in alignment.

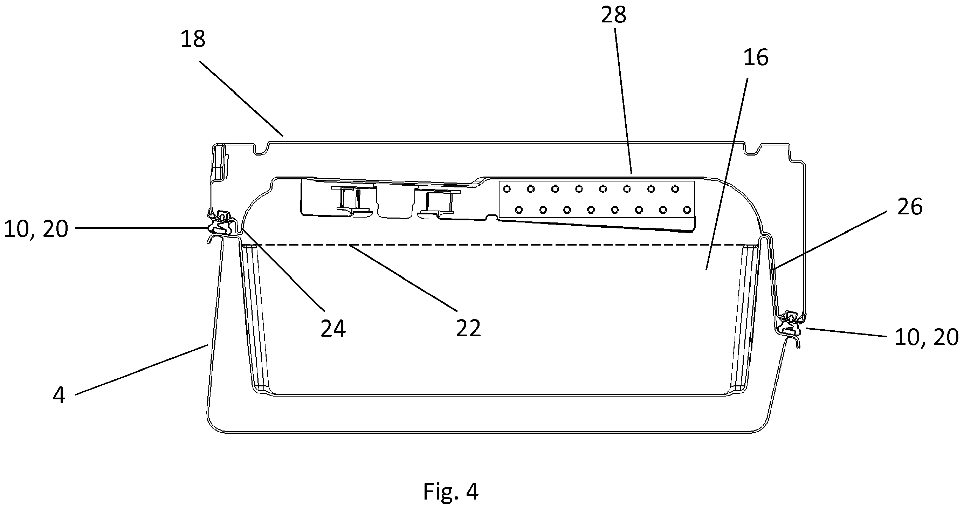

Figure 4 depicts a cross-sectional view of the drawer 4 and its lid 18 when the drawer 4 is closed and the seal is established by the gaskets 10, 20. The interior 16 of the drawer 4 is cooled by cooling means 28 (which may be in communication with or part of heat pump 6, where heat pump 6 is present, and may comprise at least one evaporator and at least one fan adapted to circulate air.) Because, as is preferred, the walls of the drawer 4 are of an even height on at least three sides, a load line 22 is established which is parallel with the top of at least three of the four external walls; this means that the drawer 4 may be filled with produce up to the same height throughout the entire drawer 4. In the embodiment depicted the lid 18 remains stationary with respect to the main body of the cooling appliance 2 when the drawer 4 is opened, but in other embodiments the lid 18 could move relative to both the appliance 2 and the drawer 4 as the drawer is opened - for instance, the lid 18 could retract partway with the drawer 4 and then automatically open.

In other designs of drawers the load line 22 described by the exterior walls of the drawer 4 is not parallel with the tops of the walls - for instance, if the two side walls were inclined such that the rear wall of the drawer 4 were lower than the front wall of the drawer 4, then the load line 22 would be defined by the rear wall and consequently less of the volume of the interior 16 would be under the load line 22. This would be the case because the load line 22 is defined by the lowest of the exterior walls of the drawer 4.

The load line 22 defines two things: firstly, a level to which it is safe to fill the drawer 4 with product before there is a risk of the product falling over one of the walls of the drawer 4 when the drawer is open and shut. (This is particularly the case with products such as frozen French fries, peas, beans and the like.) Secondly, the load line 22 establishes a well of cold air; refrigerated air above the load line 22 is likely to spill out over the lowest exterior wall when the drawer 4 is opened, but due to the fact that cool air tends to sink relative to warmer air refrigerated air beneath the load line 22 is less likely to spill out of the opened drawer 4 unless it is physically agitated or disturbed. By ensuring that the load line 22 is at the top of at least three of the four exterior walls the volume of this well of cold air is maximized (decreasing the work the cooling means 28 has to do to re-cool the drawer 4 after it is opened) and the space inside the drawer 4 used for storage can be maximised.

It will be noted from Figure 4 that a lip 24 at the front of the drawer and an overlap 26 between the lid and the portion of the exterior wall above the sealing surface 12 at the rear of the drawer (which in fact extends around the sides of the drawer 4 too) form barriers which impede cooled air from the cooling means 28 from reaching the gaskets 10, 20. This helps to reduce condensation at the sealing means 10, 20 which may undermine the seal.

## Claims

1. : A cold storage appliance (2) comprising:
a) at least one open-topped container (4) comprising an interior compartment (16), exterior walls with top portions, a base and a sealing surface (10);
b) a lid (18) associated with the container, comprising a sealing surface (20);
c) a cooling mechanism (28) associated with the container (4), comprised either in the container (4) or in the associated lid (18);
d) a structure adapted to support all of the above;
wherein the container (4) is adapted such that it may move in an essentially horizontal direction between a closed position wherein the sealing surface (10) comprised on the container (4) and the sealing surface (20) comprised on the lid (18) meet and form a seal and an open position wherein the interior compartment (16) is accessible, wherein the sealing surface (10) comprised on the container (4) is positioned on the exterior walls of the container (4) such that at least a portion (12) of the exterior wall is above the sealing surface (10) comprised on the container (4), **characterised in that** the plane of the sealing surface (10) comprised on the container (4) is inclined such that a greater proportion of the exterior walls are above the sealing surface (10) comprised on the container (4) on one side of the container (4) than on the other side.

2. : The cold storage appliance (2) of claim 1, wherein the sealing surface (10) comprised on the container (4) runs along the top of the exterior wall on one side of the container.

3. : The cold storage appliance (2) of any previous claim, wherein the exterior walls define a horizontal load line (22) within the container (4) parallel to the top portions of at least three of the exterior walls.

4. : The cold storage appliance (2) of any preceding claim, wherein the sealing surfaces (10, 20) comprise magnets arranged to impose an attractive force towards each other when the container (4) is in the closed position.

5. : The cold storage appliance (2) of claim 4, wherein the magnets are further arranged to impose a repulsive force towards each other when the container (4) is moved out of the closed position.

6. : The cold storage appliance (2) of any preceding claim, wherein the lid (18) is adapted such that is stationary throughout any motion of the container (4).

7. : The cold storage appliance (2) of any of claims 1-5, wherein the lid (18) moves relative to the structure and the container (4) when the container moves between the closed position and the open position.

8. : The cold storage appliance (2) of any preceding claim, wherein the cooling means (28) comprises at least one evaporator and at least one fan adapted to circulate air.

9. : The cold storage appliance (2) of any preceding claim, additionally comprising at least one ambient storage container (8) adapted to move relative to the structure wherein the interior of the ambient storage container is at ambient temperature.

## Patentansprüche

1. Kühllagerungsvorrichtung (2), die Folgendes umfasst:
a) mindestens einen nach oben offenen Behälter (4), der ein Innenfach (16), Außenwände mit oberen Abschnitten, eine Basis und eine Dichtungsfläche (10) umfasst;
b) einen Deckel (18), der dem Behälter zugeordnet ist und eine Dichtungsfläche (20) umfasst;
c) einen Kühlmechanismus (28), der dem Behälter (4) zugeordnet ist und entweder im Behälter (4) oder im zugehörigen Deckel (18) angeordnet ist;
d) eine Struktur zum Lagern des Obenstehenden;
wobei der Behälter (4) in einer im Wesentlichen horizontalen Richtung zwischen einer geschlossenen Position, in der die Dichtungsfläche (10) am Behälter (4) und die Dichtungsfläche (20) am Deckel (18) aufeinandertreffen und eine Dichtung ausbilden, und einer geöffneten Position, in der das Innenfach (16) zugänglich ist, beweglich ist, wobei die Dichtungsfläche (10) am Behälter (4) auf den Außenwänden des Behälters (4) angeordnet ist, sodass mindestens ein Abschnitt (12) der Außenwand über der Dichtungsfläche (10) am Behälter (4) liegt, **dadurch gekennzeichnet, dass** die Ebene der Dichtungsfläche (10) am Behälter (4) geneigt ist, sodass auf einer Seite des Behälters (4) ein größerer Anteil der Außenwände über der Dichtungsfläche (10) am Behälter (4) liegt als auf der anderen Seite.

2. Kühllagerungsvorrichtung (2) nach Anspruch 1, wobei die Dichtungsfläche (10) am Behälter (4) auf einer Seite des Behälters entlang der Oberkante der Außenwand verläuft.

3. Kühllagerungsvorrichtung (2) nach einem der vorstehenden Ansprüche, wobei die Außenwände eine horizontale Belastungslinie (22) im Behälter (4) definieren, die parallel zu den oberen Abschnitten von mindestens drei Außenwänden verläuft.

4. Kühllagerungsvorrichtung (2) nach einem der vorstehenden Ansprüche, wobei die Dichtungsflächen (10, 20) Magnete umfassen, die eine Anziehungskraft aufeinander ausüben, wenn der Behälter (4) in der geschlossenen Position ist.

5. Kühllagerungsvorrichtung (2) nach Anspruch 4, wobei die Magnete ferner eine Abstoßungskraft voneinander ausüben, wenn der Behälter (4) aus der geschlossenen Position heraus bewegt wird.

6. Kühllagerungsvorrichtung (2) nach einem der vorstehenden Ansprüche, wobei der Deckel (18) während jeglicher Bewegung des Behälters (4) stationär ist.

7. Kühllagerungsvorrichtung (2) nach einem der Ansprüche 1-5, wobei der Deckel (18) in Bezug zur Struktur und zum Behälter (4) beweglich ist, wenn sich der Behälter zwischen der geschlossenen Position und der geöffneten Position bewegt.

8. Kühllagerungsvorrichtung (2) nach einem der vorstehenden Ansprüche, wobei die Kühleinrichtung (28) mindestens einen Verdampfer und mindestens ein Gebläse zum Zirkulieren von Luft umfasst.

9. Kühllagerungsvorrichtung (2) nach einem der vorstehenden Ansprüche, zusätzlich mindestens einen Umgebungsaufbewahrungsbehälter (8) umfassend, der in Bezug zur Struktur beweglich ist, wobei das Innere des Umgebungsaufbewahrungsbehälters Umgebungstemperatur aufweist.

## Revendications

1. Appareil de stockage frigorifique (2), comprenant :
a) au moins un bac à haut ouvert (4) comprenant un compartiment intérieur (16), des parois extérieures avec des parties supérieures, une base et une surface d'étanchéité (10) ;
b) un couvercle (18) associé au bac, comprenant une surface d'étanchéité (20) ;
c) un mécanisme de refroidissement (28) associé au bac (4), compris dans le bac (4) ou dans le couvercle associé (18) ;
d) une structure adaptée pour supporter la totalité de ce qui précède ;
dans lequel le bac (4) est adapté de telle sorte qu'il puisse se déplacer dans une direction essentiellement horizontale entre une position fermée, dans laquelle la surface d'étanchéité (10) comprise sur le bac (4) et la surface d'étanchéité (20) comprise sur le couvercle (18) se rencontrent et forment un joint d'étanchéité, et une position ouverte, dans laquelle le compartiment intérieur (16) est accessible,
dans lequel la surface d'étanchéité (10) comprise sur le bac (4) est positionnée sur les parois extérieures du bac (4) de telle sorte qu'au moins une partie (12) de la paroi extérieure soit au-dessus de la surface d'étanchéité (10) comprise sur le bac (4),
**caractérisé en ce que** le plan de la surface d'étanchéité (10) comprise sur le bac (4) est incliné de telle sorte qu'une proportion des parois extérieures au-dessus de la surface d'étanchéité (10), comprise sur le bac (4), soit plus grande sur un côté du bac (4) que sur l'autre côté.

2. Appareil de stockage frigorifique (2) selon la revendication 1, dans lequel la surface d'étanchéité (10) comprise sur le bac (4) se trouve le long du haut de la paroi extérieure sur un côté du bac.

3. Appareil de stockage frigorifique (2) selon une quelconque revendication précédente, dans lequel les parois extérieures définissent une ligne de charge horizontale (22) à l'intérieur du bac (4) parallèle aux parties supérieures d'au moins trois des parois extérieures.

4. Appareil de stockage frigorifique (2) selon une quelconque revendication précédente, dans lequel les surfaces d'étanchéité (10, 20) comprennent des aimants agencés pour imposer une force d'attraction les uns vers les autres lorsque le bac (4) est dans la position fermée.

5. Appareil de stockage frigorifique (2) selon la revendication 4, dans lequel les aimants sont en outre agencés pour imposer une force de répulsion les uns vers les autres lorsque le bac (4) est déplacé hors de la position fermée.

6. Appareil de stockage frigorifique (2) selon une quelconque revendication précédente, dans lequel le couvercle (18) est adapté de telle sorte qu'il soit stationnaire durant la totalité d'un quelconque mouvement du bac (4).

7. Appareil de stockage frigorifique (2) selon l'une quelconque des revendications 1 à 5, dans lequel le couvercle (18) se déplace relativement à la structure et au bac (4) lorsque le bac se déplace entre la position fermée et la position ouverte.

8. Appareil de stockage frigorifique (2) selon une quelconque revendication précédente, dans lequel le moyen de refroidissement (28) comprend au moins un évaporateur et au moins un ventilateur adapté pour faire circuler de l'air.

9. Appareil de stockage frigorifique (2) selon une quelconque revendication précédente, comprenant en outre au moins un bac de stockage à température ambiante (8) adapté pour se déplacer relativement à la structure, dans lequel l'intérieur du bac de stockage à température ambiante est à température ambiante.
